# EUROPEAN PATENT APPLICATION

(11) **EP 2 613 288 A1**
(43) Date of publication of application: **10.07.2013**
(21) Application number: 13150481.3
(22) Date of filing: 08.01.2013
(51) Int. Cl.: G06Q 30/06, H04W 4/02

(54) **Location aware audio rendering**

(30) Priority: 08.01.2012 US 201213345725
(71) Applicant: Harman International Industries, Incorporated, Northridge, CA 91329 (US)
(72) Inventor: Baalu, Arvin, Bangalore (IN); Krishnan B S, Anantha, 560061 Bangalore (IN)
(74) Representative: Bertsch, Florian Oliver

(57) **Abstract**

Systems and method for requesting audio content that is stored in a network cloud by many different audio devices where each of the audio devices sends location data and access profile information that enables audio content to be downloaded that is associated with the area identified by the location data.

## Description

### BACKGROUND

### 1. Field of the Invention.

This application relates to the field of audio systems. More specifically, the application relates to systems for delivering and rendering audio signals based on the location of an audio device.

### 2. Related Art.

It is known to provide audio and video content to remote devices, such as personal computers and internet enabled televisions. With the advancement of wireless devices and smart telephones, mobile devices are now capable of receiving audio and video content while a person is on the move. Many of these wireless devices have location identification apparatus, such as global location receivers built into them. There has been some interest in downloading internet advertising to smart phones and other display devices based upon a device's location. But such approaches have been limited to graphical and text information. The downloading of audio content to a personal media player (PMP) associated with a person's location does not exist.

Thus, there is a need in the art for improvements that address the aforementioned problems and facilitate the identification of audio content based upon the location of a PMP. The aforementioned shortcomings and others are addressed by systems and related methods according to aspects of the invention.

### SUMMARY

In view of the above, systems and methods are provided for delivering audio content to an audio device from a cloud access server (CAS) that resides in a cloud network based upon the location of the audio device. The CAS receives a message that indicates the location of the audio device. Based upon the location, the CAS causes audio content to be identified and downloaded to the audio device. Such processing may include the CAS receiving a device identifier along with an indication of the location.

Other devices, apparatuses, systems, methods, features and advantages of the invention will be or will become apparent to one with skill in the art upon examination of the following figures and detailed description. It is intended that all such additional systems, methods, features and advantages be included within this description, be within the scope of the invention, and be protected by the accompanying claims.

### BRIEF DESCRIPTION OF THE FIGURES

The description below may be better understood by referring to the following figures. The components in the figures are not necessarily to scale, emphasis instead being placed upon illustrating the principles of the invention. In the figures, like reference numerals designate corresponding parts throughout the different views.
FIG. 1 is an illustration of a portable media player (PMP) having a GPS receiver in accordance with one example of an implementation of the invention.
FIG. 2 is a block diagram of one example of an implementation of the PMP of FIG. 1.
FIG. 3 is a block diagram of a cloud audio server (CAS) in accordance with one example of an implementation of the invention.
FIG. 4 is a diagram of one example of an implementation of a cloud network with a PMP of FIG. 1 and the CAS of FIG. 3.
FIG. 5 is a flow diagram of one example of an implementation of the cloud based audio rendering approach implemented on the CAS of FIG. 3.
FIG. 6 is a flow diagram of one example of an implementation of the cloud based location aware audio rendering approach implemented on an audio device, such as PMP of FIG. 1.

### DETAILED DESCRIPTION

Cloud computing has brought a paradigm shift to the way in which information is hosted, processed, and exchanged, where cloud computing is defined as the delivery of computing as a service rather than a product, whereby shared resources, software and information are provided to computers and other devices as a utility over a network (typically the Internet). Accessibility, scalability, and reliability advantages of cloud computing has resulted in new types of processing and seemingly infinite storage capacity. One technology that may benefit from this paradigm shift is the delivery of audio content. Audio content may now be stored in the network cloud and accessed by many different audio devices in response or association with their location. Each of these audio devices may have a location identifier that may be sent to a cloud audio server (CAS) and results in the downloading of the associated audio content.

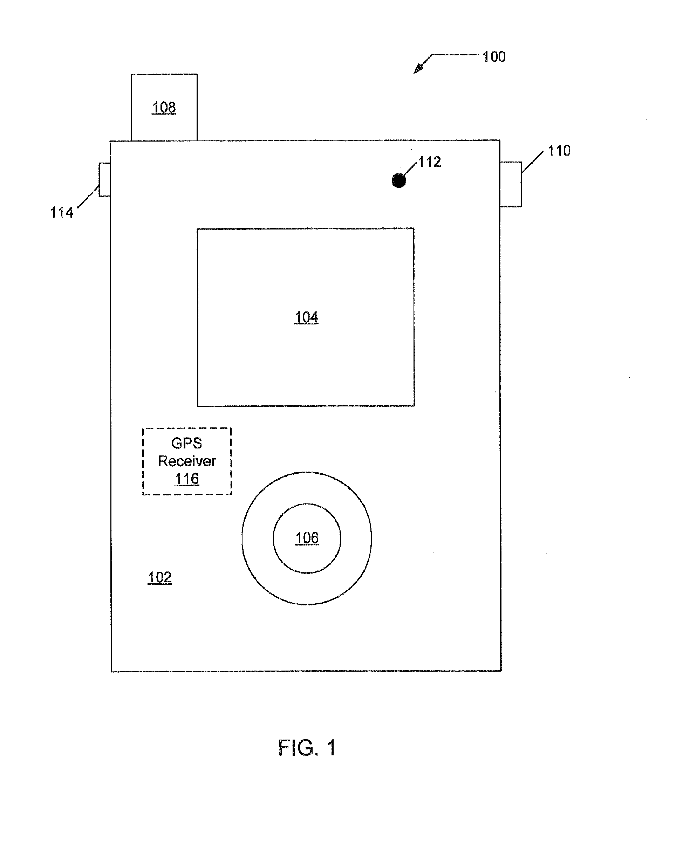

FIG. 1 is an illustration of a portable media player (PMP) 102 having a GPS receiver 116 in accordance with one example of an implementation of the invention. The PMP 102 may have a display 104, controls 106, wireless internet antenna 108, earphone jack 110, and microphone 112. The PMP may access the internet using the wireless internet antenna 108 to connect with a wireless 802.3b/g or n internet access point or router. The display 104 along with controls 106 may be used to traverse graphical menus to setup and use the PMP 102. The display 104 may also be used to provide feedback to a user regarding the current audio content that is being played by the PMP 102. An earphone jack 110 may be present for connecting external speakers or earphones to the PMP 102. A microphone 112 or microphone jack may be built into the PMP 102 for recording audio sounds. Additionally, a universal serial bus (USB) port 114 may also be present in the PMP 102 in order for the PMP 102 to be connected to a computing device, such as a personal computer. Examples of PMP 102 may include APPLE's IPAD, TRIO 4300HD, and SANSA E200 personal media players. Cellular smart phones, such as APPLE's IPHONE and HTC's DROID phones may also function as media players. PMPs typically play MP3 or WMA (APPLE products ITUNES) encoded two channel audio signals.

The PMP 102 may have a GPS receiver 116 that receives satellite position signals for determination of the PMP's 102 location. In other implementations, other location determination approaches may be employed, such as input by a user and position data provided via the wireless network.

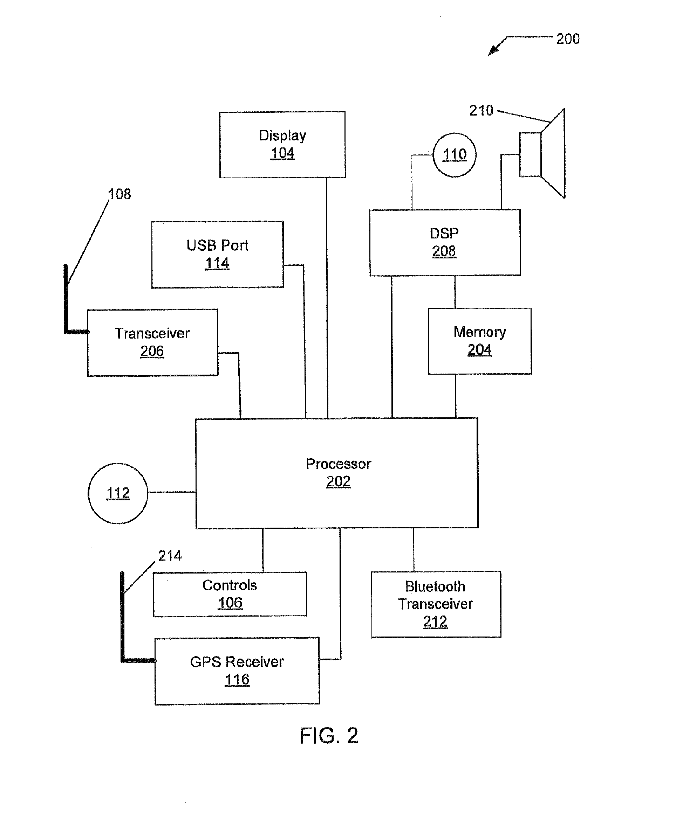

Turning to FIG. 2, FIG. 2 is a block diagram 200 of one example of an implementation of the PMP 102 of FIG. 1. A processor 202 or other controller may be connected to display 104, controls 106, memory 204, microphone 112, Wi-Fi transceiver 206 that may be coupled to antenna 108 (such as a wireless internet antenna), USB port 114, digital signal processor (DSP) 208 that may also be coupled with memory 204. DSP 208 may also be coupled to speaker 210 and earphone jack 110. The processor 202 may optionally have a Bluetooth transceiver 212 for communicating with Bluetooth enabled devices, such as speakers, headsets, and receivers. The processor 202 may also be coupled to a GPS receiver 116 that is coupled to a GPS antenna 214. In other implementations, the GPS antenna 214 and transceiver antenna may be a shared antenna or collocated antenna.

The DSP 208 is able to access the audio content (i.e. audio data stream or audio data in memory) and generate audio signals from the audio content. In the current example implementation the processor 202 and DSP 208 are shown as being separate, but in other implementations the processor 202 and DSP 208 may be combined into a single processor or a single DSP. The memory 204 is depicted as a single memory, but in practice the memory may be divided between different types of memory located in more than one location within the PMP 102. Examples of such memory may be removable SD random access memory (RAM), RAM located within the DSP, RAM located within the processor, and display buffers associated with display 104.

Audio content may be downloaded to the PMP 102 via wireless internet antenna 108 by wifi transceiver 206 and stored in memory 204 for access by the DSP 208 when audio signals are desired from the audio content. The PMP 102 may access cloud implemented servers to receive the audio content. In some implementations, the audio content that is accessed may be streaming audio content. The streaming content is received via Wi-Fi transceiver 206 and routed to the DSP 208 for generation of audio signals that may be heard via speaker 210 made available at earphone jack 110.

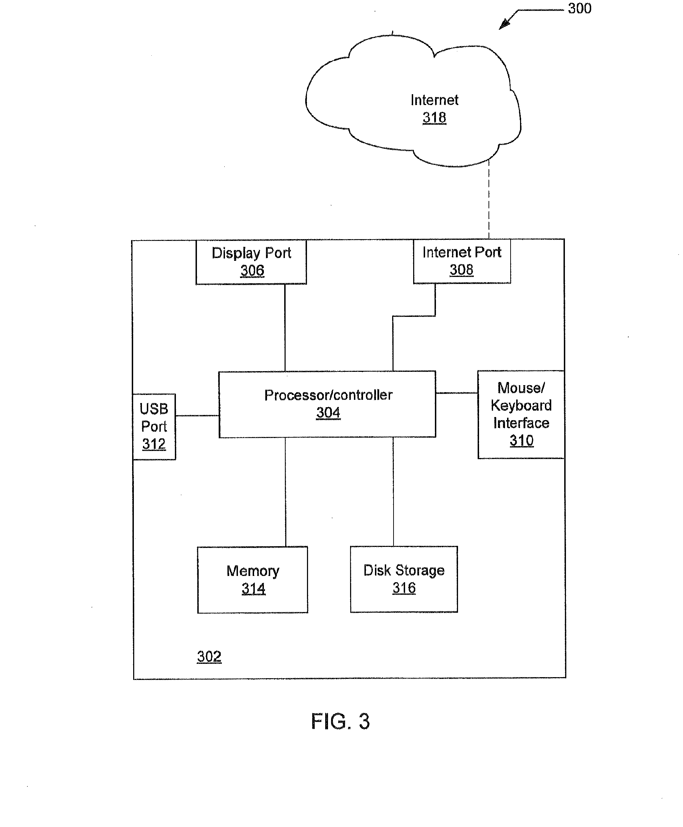

Turning to FIG. 3, FIG. 3 is a block diagram 300 of a cloud audio server (CAS) 302 in accordance with one example of an implementation of the invention. The CAS 302 may have a processor 304 (i.e. microprocessor, RISC processor, DSP, or other digital type processor). The processor 304 may be coupled to a display port 306, internet port 308, mouse/keyboard interface 310, USB port 312, memory 314, and disk storage 316. The CAS 302 may be executing a LINUX operating system and associated programs to operate as a server. In other implementation, a windows or other type server operating system may be used to provide the base server functionality for accessing disk, hardware, and network resources in addition to providing network connectivity to the internet and/or cloud network 318.

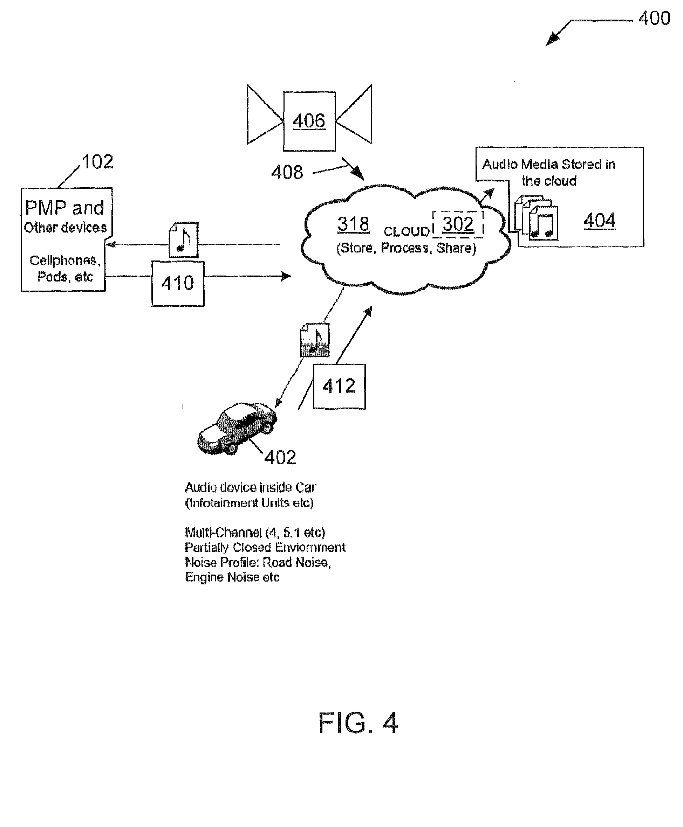

FIG. 4 is a diagram 400 of one example of an implementation of a cloud network 318 with a PMP 102 of FIG. 1 and the CAS 302 of FIG. 3. The different types of mobile audio devices, such as PMP 102 and audio devices inside vehicles, such as 402, may access the cloud network 318 with their location and retrieve audio content 404. Within the cloud network 318, there may be one or more CAS 302 that assists in locating and providing audio content data to a requesting audio device, such as PMP 102. The cloud network 318 may also communicate with a location server (not shown) that receives position signals 408 from positioning satellites 406 in order to provide positioning data, such as ephemeris data, to PMPs.

The identification of the audio content may be based upon location, such as by a point of interest. The audio content may also be based partially upon location and partially upon a user profile 410 and 412. The user profile may indicate the type of music, historic information, local news, or even emergency notices and be incorporated into audio content request. For example, if jazz music is indicated as being preferred in a user profile, jazz artist recording associated with that location or region may be downloaded. If historic information is indicated, then audio content explaining historic places that are at or near the location of the PMP 102 may be automatically downloaded and played. The request for audio data to be downloaded may be sent automatically to the CAS 302 from the PMP 102 upon an event occurring, such as a button being pressed, menu item selected, or other user action. Additionally, an event may be a predetermined change in location or region (such as every 5 mile change in location results in a request for audio content).

The audio content once stored in the PMP 102 would be stored in the memory using a first-in, first-delete approach when the memory fills up. The PMP 102 may indicate that a downloaded item is not to be automatically deleted by a user using a menu displayed on display 104 and controls 106. In other implementations, the PMP 102 may be configured to only download audio content until the memory is full. After which, the PMP 102 may stop sending audio content requests to the CAS 302.

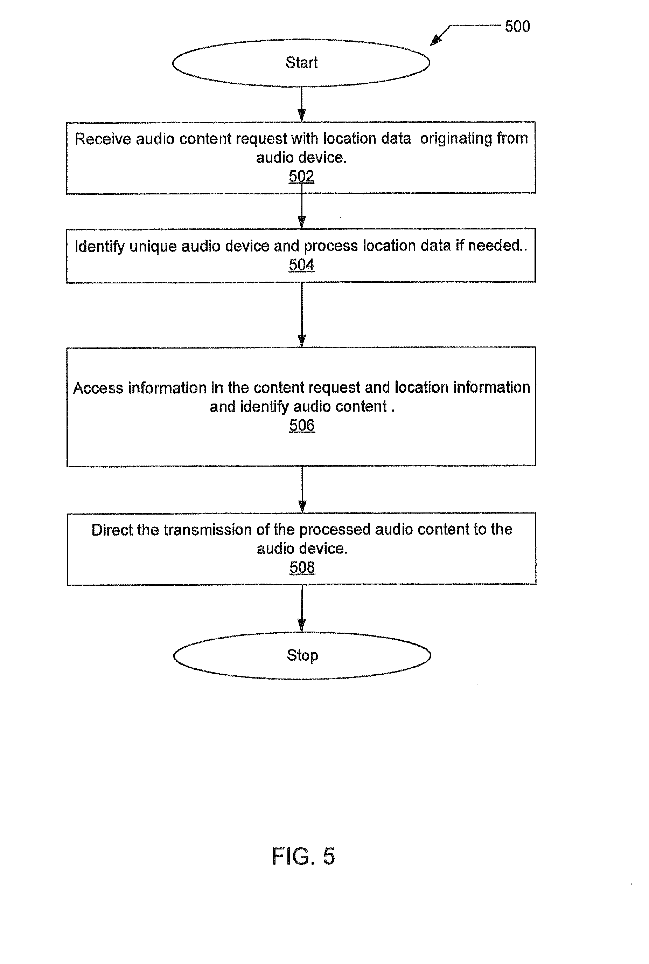

FIG. 5 is a flow diagram 500 of one example of an implementation of the cloud based audio rendering approach implemented on the CAS 302 of FIG. 3. The approach starts by receiving an audio content request with location data that originated from the audio device 502, such as a PMP 102 at the CAS 302. Being a cloud network 318 implementation, it is possible for the request to be passed among servers before reaching CAS 302 because of distributed processing available in the cloud network. The CAS 302 may access a unique identification that may be contained in the request associated with the audio device (PMP 102) along with the location data. The CAS 302 may then process the location data 504 and convert it to a geographical associated identifier, such as GPS coordinates or city identifier.

The CAS 302 may then access the information and data contained in the content request and the location information in order to identify audio content 506. The identified audio content may reside on the CAS 302 or on other servers in the cloud network 318. The CAS 302 may then direct or initiate the downloading of the identified audio content 508. The identified audio content may reside on the CAS 302 or in other implementations, may reside on a server located in the cloud network 318 that is directed to download (or stream) the processed audio content to the PMP 102.

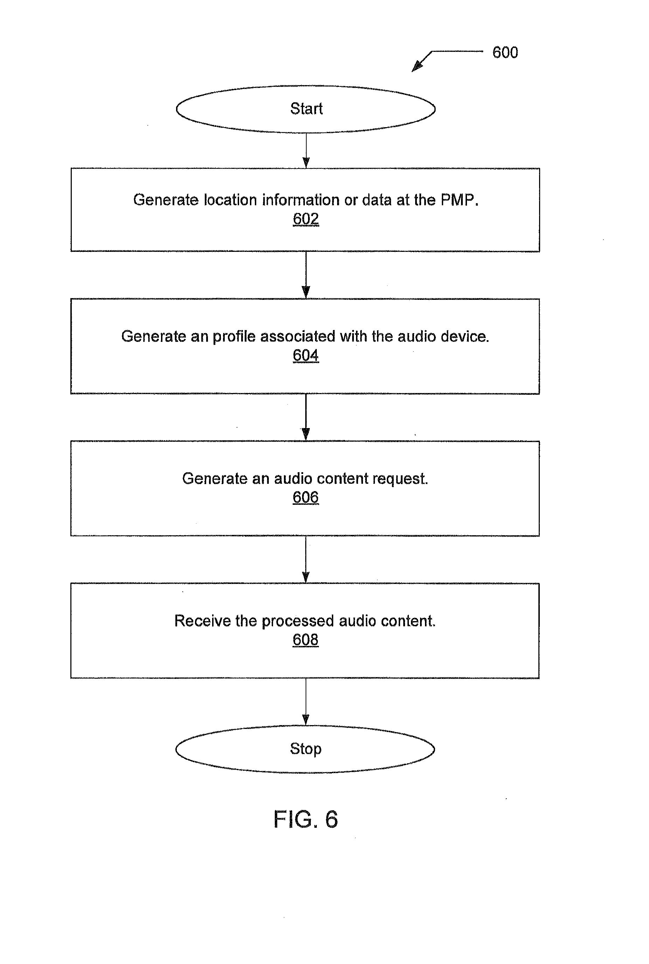

Turning to FIG. 6, FIG. 6 is a flow diagram 600 of one example of an implementation of the cloud based location aware audio rendering approach implemented on an audio device, such as PMP 102 of FIG. 1. Location information or data at the PMP 102 maybe generated 602 or acquired. The location information may be generated via a satellite positioning receiver (GPS) located in the PMP 602, accessing another device to receive the location information (such as accessing a cellular telephone where a connection is either wired or wireless), or having location information entered by a user (directly with a touch screen or keypad/via optical input such as a bar code). A profile associated with the PMP 102 and user may be generated if it has not already been created 604. The profile may reside at the PMP 102 in the current implementation. In other implementations, the profile may be stored in a database that resides on one or more CAS.

An audio content request message may then be generated at the PMP 102 and transmitted to the CAS 302 in step 606. In response to the audio content request message, audio content is downloaded 608 to the PMP 102.

It will be understood, and is appreciated by persons skilled in the art, that one or more processes, sub-processes, or process steps described in connection with FIGS. 5 and 6 may be performed by hardware and/or software. If a server is described, the term server may mean a combination of hardware and software operating together as a dedicated server or it may mean software executed on a server to implement the approach previously described. If the process is performed by software, the software may reside in software memory (not shown) in a suitable electronic processing component or system such as, one or more of the functional components or modules schematically depicted in the figures.

The software in software memory may include an ordered listing of executable instructions for implementing logical functions (that is, "logic" that may be implemented either in digital form such as digital circuitry or source code or in analog form such as analog circuitry or an analog source such an analog electrical, sound or video signal), and may selectively be embodied in any computer-readable medium for use by or in connection with an instruction execution system, apparatus, or device, such as a computer-based system, processor-containing system, or other system that may selectively fetch the instructions from the instruction execution system, apparatus, or device and execute the instructions. In the context of this disclosure, a "computer-readable medium" is any tangible means that may contain or store the program for use by or in connection with the instruction execution system, apparatus, or device. The tangible computer readable medium may selectively be, for example, but is not limited to, an electronic, magnetic, optical, electromagnetic, infrared, or semiconductor system, apparatus or device. More specific examples, but nonetheless a non-exhaustive list, of tangible computer-readable media would include the following: a portable computer diskette (magnetic), a RAM (electronic), a read-only memory "ROM" (electronic), an erasable programmable read-only memory (EPROM or Flash memory) (electronic) and a portable compact disc read-only memory "CDROM" (optical). Note that the computer-readable medium may even be paper (punch cards or punch tape) or another suitable medium upon which the can be electronically captured, then compiled, interpreted or otherwise processed in a suitable manner if necessary, and stored in a computer memory.

The foregoing description of implementations has been presented for purposes of illustration and description. It is not exhaustive and does not limit the claimed invention to the precise form disclosed. Modifications and variations are possible in light of the above description or may be acquired from practicing the invention. The claims and their equivalents define the scope of the invention.

## Claims

1. A cloud access server (302) for audio rendering audio data to an audio device, comprising:
a communication port; and
a processor (304) coupled to a communication port, that identifies audio content in response to an audio content request where the audio content request has associated with it a profile and location data and the audio content is identified using both the profile and the location data.

2. The cloud access server (302) of claim 1, where the location data is GPS data.

3. The cloud access server (302) according to claim 1 or 2, where the location data is an address.

4. The cloud access server (302) according to any of claims 1 to 3, where the device profile indicates an audio device identifier.

5. The cloud access server (302) according to any of claims 1 to 4, further includes the processor initiating the downloading of the audio content to the audio device.

6. The cloud access server (302) according to any of claims 1 to 5, where the communication port is a wireless internet communication port.

7. An audio device (102) with audio rendering, comprising:
a communication port;
a memory (204) with a profile;
a location identification module (116) that has associated location data; and
a processor (202) coupled to the memory, communication port and location identification module (116), where the processor formats an audio content request with data associated with the profile and location data.

8. The audio device (102) of claim 7, where the location identification module is a GPS receiver.

9. The audio device of claim 7 or 8, where the location data is GPS data.

10. The audio device according to any of claims 7 to 9, where the profile identifies a style of music.

11. The audio device according to any of claims 7 to 10, where the communication port receives audio content in response to the transmission of the audio content request.

12. An audio device, comprising:
a communication port; and
a processor coupled to a communication port, that generates an audio content request, where the audio content request has associated with it a profile and location data and is transmitted via the communication.

13. The audio device of claim 12, where the location data is GPS data.

14. The audio device of claim 12 or 13, where the location data is an address.

15. The audio device according to any of claims 12 to 14, where the device profile has an audio device identifier.

16. The audio device according to any of claims 12 to 15, further includes receipt of audio content at the communication port in response to the transmission of the audio content request.

17. The audio device according to any of claims 12 to 16, where the communication port is a wireless internet communication port.

18. A method for audio rendering audio data to an audio device with a cloud access server, comprising:
receiving at a communication port at the cloud access server an audio content request with location data;
accessing data in the audio content request including the location data;
identifying audio content with a processor coupled to a communication port, in response to the audio content request; and
directing the transmission of audio content in response to the identification of the audio content.

19. The method of claim 18, where the accessing of location data is accessing GPS data.

20. The method of claim 18 or 19, where accessing the location data is accessing an address.

21. The method according to any of claims 18 to 20, where accessing the data further includes reading a device profile that is associated with the audio content request which includes an audio device identifier.

22. The method according to any of claims 18 to 21, where directing the transmission of audio content further includes initiating the downloading of the audio content formatted for receipt by an audio device.

23. The method according to any of claims 18 to 22, where the communication port is a wireless internet communication port.
